# EUROPÄISCHE PATENTSCHRIFT

(11) **EP 0 594 557 B1**
(45) Veröffentlichungstag und Bekanntmachung des Hinweises auf die Patenterteilung: **23.02.2000**
(21) Anmeldenummer: 93890205.3
(22) Anmeldetag: 20.10.1993
(51) Int. Cl.: C21B 13/00

(54) **Verfahren zur Herstellung von flüssigem Roheisen oder flüssigen Stahlvorprodukten**
Process for producing molten pig iron or molten steel pre-products
Procédé pour produire de la fonte brute liquide ou des produits d'acier préaffinés liquides

(30) Priorität: 22.10.1992 AT 209692
(43) Veröffentlichungstag der Anmeldung: 27.04.1994
(60) Teilanmeldung: 99113824.9
(73) Patentinhaber: VOEST-ALPINE Industrieanlagenbau GmbH, A-4020 Linz (AT); RESEARCH INSTITUTE OF INDUSTRIAL SCIENCE & TECHNOLOGY, INCORPORATED FOUNDATION, Pohang City, Kyong Sang Book-do 790-330 (KR); POHANG IRON & STEEL CO., LTD., Pohang City, Kyong Sang Book-Do 790-300 (KR)
(72) Erfinder: Kepplinger, Werner, Dipl.-Ing. Dr., A-4060 Leonding (AT); Matzawrakos, Panajiotis, Dipl.-Ing., A-4020 Linz (AT); Schenk, Johannes, Dipl.-Ing. Dr., A-4040 Linz (AT); Siuka, Dieter, Dipl.-Ing., A-4501 Neuhofen (AT); Böhm, Christian, Dipl.-Ing., A-4600 Wels (AT)
(74) Vertreter: Kopecky, Helmut, Dipl.-Ing. Kopecky & Schwarz Patentanwälte

(56) Entgegenhaltungen:
- EP-A- 0 217 331
- EP-A- 0 368 835
- FR-A- 1 243 733
- US-A- 4 072 504
- PATENT ABSTRACTS OF JAPAN vol. 008, no. 232 (C-248)25. Oktober 1984 & JP-A-59 113 107 (KAWASAKI SEITESU) 29. Juni 1984

## Beschreibung

Die Erfindung betrifft ein Verfahren zur Herstellung von flüssigem Roheisen oder flüssigen Stahlvorprodukten aus von Eisenerzen und Zuschlägen gebildeten, zumindest teilweise einen Feinanteil aufweisenden Einsatzstoffen, wobei die Einsatzstoffe in einer Vorwärmzone einer Vorwärmung im Wirbelschichtverfahren unterzogen werden, in mindestens einer Reduktionszone im Wirbelschichtverfahren zu Eisenschwamm direkt und weitgehend fertig reduziert werden, der Eisenschwamm in eine Einschmelzvergasungszone chargiert, unter Zufuhr von Kohlenstoffträgern und sauerstoffhältigem Gas erschmolzen und ein CO- und H₂-hältiges Reduktionsgas erzeugt wird, welches in die Reduktionszone eingeleitet, dort umgesetzt, als Exportgas abgezogen und einem Verbraucher zugeführt wird, sowie eine Anlage zur Durchführung des Verfahrens.

Ein Verfahren dieser Art ist beispielsweise aus der AT-B 390 622 bekannt. Gemäß der AT-B 390 622 werden Einsatzstoffe mit stark unterschiedlichen Korngrößen verarbeitet, wobei die Einsatzstoffe vorreduziert werden und durch Windsichten in Fraktionen mit unterschiedlichen Korngrößen getrennt werden, die dann getrennt fertigreduziert werden. Dieses bekannte einstufige Verfahren bietet jedoch nur eine geringe Wärmeausnützung des Reduktionsgases und bedingt aus diesem Grund einen erhöhten Reduktionsgasbedarf. Zudem ist keine optimale Ausnutzung der im Reduktionsgas chemisch gebundenen Energie gegeben.

Die Erfindung stellt sich die Aufgabe, ein Verfahren der eingangs beschriebenen Art sowie eine Anlage zur Durchführung des Verfahrens zu schaffen, welche den Einsatz von zumindest einen Feinanteil aufweisenden Eisenerzen und Zuschlägen in wirtschaftlicher Weise unter Verwendung von unbehandelter Kohle als Kohlenstoffträger ermöglicht. Insbesondere soll durch die Erfindung gesichert sein, daß sowohl der Feinanteil des Erzes als auch sein Grobanteil einer weitgehenden Fertigreduktion unterworfen werden.

Diese Aufgabe wird bei einem in Anspruch 1 definierten Verfahren der eingangs beschriebenen Art erfindungsgemäß dadurch gelöst,
- daß in der Einschmelzvergasungszone gebildetes Reduktionsgas zum Teil der Reduktionszone direkt - u.zw. ohne Reinigung - zur Bildung einer Wirbeischicht zugeführt und
- zum anderen Teil nach Reinigung in einem Heißzyklon der Reduktionszone in ein in ihrem unteren Teil gebildetes Bett, gebildet von größeren Feststoffteilchen, zugeführt wird.

Eine Anlage zur Durchführung des beanspruchten Verfahrens ist in Anspruch 13 definiert. Ansprüche 2-12 und 14-20 beschreiben bevorzugte Ausführungsformen des Verfahrens nach Anspruch 1 bzw. der Anlage nach Anspruch 14.

Gemäß der AT-B 387 403 werden siderithältige und/oder hydratische Einsatzstoffe in einer der Festbett-Direktreduktionszone vorgeordneten Festbett-Aufheizzone kalziniert, wobei jedoch nur grobstückige, nur im Festbett verarbeitbare eisenerzhältige Einsatzstoffe zum Einsatz gelangen.

Für die Erfindung ist es wesentlich, daß die Einsatzstoffe nicht im Stoffgegenstrom, wie bei den bekannten Festbett-Verfahren (AT-B 387 403), sondern in stabilen oder zirkulierenden Wirbelschichten, also etwa im Kreuzstrom, verarbeitet werden, wodurch wegen der besseren energetischen Gasausnützung eine wirtschaftliche Verarbeitung von Feinerzen und Erzstäuben ermöglicht ist. Dies ist deswegen von Bedeutung, da derzeit aufder Welt ca. 75% der Erze als Feinerz anfallen und dieses billiger als Stückerz oder Agglomerate ist.

Aus der US-A - 5,082,251 ist ein Direktredüktionsverfahren bekannt, gemäß dem eisenreiche Feinerze nach einer zur Herstellung einer sehr engen Korngrößenverteilung dienenden und daher dementsprechend aufwendigen Erzvorbereitung, wie Trocknen, Sieben und Brechen, in einem System von Wirbelschichtreaktoren in Kaskadenanordnung mit Hilfe von reformiertem Erdgas oder Öl reduziert werden. Das Eisenpulver wird anschließend heiß oder kalt brikettiert. Als Fluidisierungsgas findet in der Vorwärmstufe Rauchgas Verwendung, das durch die Verbrennung von Luft und Erdgas erzeugt wird; es muß also Fremdenergie eingebracht werden, wobei nur die fühlbare Wärme der Wirbelgase ausgenützt werden kann. Im Unterschied dazu erfolgt die Reduktion gemäß dem erfindungsgemäßen Verfahren mit festen Kohlenstoffträgern, wie Kohle, und damit überwiegt erfindungsgemäß die CO-Reduktion, wogegen gemäß der US-A - 5,082,251 die Erzdirektreduktion in der Hauptsache durch H₂ erfolgt.

Zur Abkühlung des in der Einschmelzvergasungszone gebildeten Reduktionsgases wird dieses erfindungsgemäß nach einer Reinigung in dem Heißzyklon und in einem Wäscher dem ersten, der Reduktionszone zugeführten Teil des Reduktionsgases als Kühlgas beigemengt.

Vorzugsweise werden zumindest die feinteiligeren weitgehend fertig reduzierten Einsatzstoffe mittels einer Zwangsförderung, vorzugsweise einer pneumatischen Förderung, in das Fließbett und/oder gegebenenfalls auch in das Festbett der Einschmelzvergasungszone chargiert und dort erschmolzen.

Zur effektiven Vorwärmung der Einsatzstoffe wird vorteilhaft das aus der Reduktionszone austretende Reduktionsgas der Vorwärmzone zugeführt, wobei durch eine Teilverbrennung des Reduktionsgases eine Temperaturerhöhung vorgenommen wird.

Zur effektiven Verwertung des bei der Reduktion anfallenden Staubes bzw. der Feinteile wird vorteilhaft das aus der Reduktionszone abgezogene Reduktionsgas in einem Reduktionszyklon von Feinteilen befreit und werden die im Reduktionszyklon abgeschiedenen Feinteile während des Abscheidens weitgehend fertig reduziert sowie mit Hilfe eines Injektors der Einschmelzvergasungszone im Bereich der Zuführung von sauerstoffhältigem Gas zugeführt.

Bereits frühzeitig in der Reduktionszone fertig reduzierte Feinteile werden zweckmäßig zum Teil aus der Wirbelschicht der Reduktionszone ausgetragen und über ein Schleusensystem mit Hilfe eines Injektors der Einschmelzvergasungszone im Bereich der Zuführung von sauerstoffhältigem Gas zugeführt, wobei zweckmäßig der aus der Wirbelschicht der Reduktionszone ausgetragene Teil der Einsatzstoffe gemeinsam mit dem im Reduktionszyklon abgeschiedenen Gut der Einschmelzvergasungszone zugeführt wird.

Hierbei wird vorteilhaft der im Heißzyklon abgeschiedene Staub über ein Schleusensystem mit Hilfe eines Injektors und mittels eines Sauerstoffstaubbrenners der Einschmelzvergasungszone im Bereich zwischen einem sich dort bildenden Feinkoksfließbett und einem Grobkoksfließbett zugeführt.

Die Zugabe der Zuschläge erfolgt zweckmäßig, indem ein Teil der für das Einschmelzverfahren benötigten Zuschläge gemeinsam mit der Kohle direkt in die Einschmelzvergasungszone chargiert und ein Teil der Zuschläge gemeinsam mit dem Feinerz in die Vorwärmzone chargiert wird, wobei vorteilhaft die gemeinsam mit der Kohle chargierten Zuschläge als Grobkorn, vorzugsweise in der Größe zwischen 4 mm und 12,7 mm, und die gemeinsam mit dem Feinerz chargierten Zuschläge in feinkörniger Form, vorzugsweise in der Größenordnung zwischen 2 mm und 6,3 mm, eingesetzt werden.

Eine besonders effektive Reduktion läßt sich dadurch erzielen, daß zwei örtlich getrennte hintereinandergeschaltete Reduktionszonen vorgesehen sind, wobei das Reduktionsgas, das aus der ersten Reduktionszone austritt, der zweiten, der ersten Reduktionszone im Sinne des Feinerzflusses vorgeordneten Reduktionszone zugeleitet und von dieser unter Druckverdichtung der Vorwärmzone zugeführt wird.

Zur Verwertung des bei dem Prozeß anfallenden Überschußgases wird gemäß einer bevorzugten Ausführungsform das aus der Vorwärmzone austretende Exportgas gegebenenfalls nach Zumischung eines Teiles des aus der Reduktionszone austretenden Reduktionsgases nach einer CO₂-Reinigung zur Erzeugung von heiß brikettiertem Eisen herangezogen, wobei Feinen in einer Vorwärmzone einer Vorwärmung unterzogen, anschließend in mindestens einer Reduktionszone einer weitgehenden Fertigreduktion unterzogen und weiters einer Verdichter- und Brikettiereinrichtung zugeführt wird, und das Exportgas nach einer Aufheizung in die mindestens eine Reduktionszone unter Bildung eines Wirbelbettes geleitet sowie von dieser nach Durchströmen desselben abgezogen und der Vorwärmzone unter Teilverbrennung zwecks Temperaturerhöhung zur Bildung eines Wirbelbettes zugeführt wird.

Vorteilhaft werden vorwiegend hämatitische und/oder magnetitische Feinerze und/oder Erzstäube verarbeitet.

Eine Anlage zur Durchführung des erfindungsgemäßen Verfahrens mit mindestens einem Wirbelschicht-Reduktionsreaktor, in den eine Förderleitung für Eisenerz und Zuschläge enthaltende Einsatzstoffe, eine Gasleitung für ein Reduktionsgas sowie eine Förderleitung für das in ihm gebildete Reduktionsprodukt und eine Gasleitung für das Topgas münden, und mit einem Einschmelzvergaser, in den die das Reduktionsprodukt aus dem Reduktionsreaktor führende Förderleitung mündet und der Zuleitungen für sauerstoffhältige Gase und Kohlenstoffträger sowie Abstiche für Roheisen bzw. Stahlvormaterial und Schlacke aufweist, wobei die in den Reduktionsreaktor mündende Gasleitung für im Einschmelzvergaser gebildetes Reduktionsgas vom Einschmelzvergaser ausgeht und dem Wirbelschicht-Reduktionsreaktor ein Wirbelschicht-Vorwärmreaktor in Fließrichtung der Einsatzstoffe vorgeordnet ist, in den die Gasleitung des Reduktionsreaktors einmündet, ist dadurch gekennzeichnet, daß die Gasleitung für das Reduktionsgas mit einer ersten Zweigleitung über eine Gasreinigungseinrichtung in einen unteren Bereich des Reduktionsreaktors mündet und von der Gasleitung vor der Gasreinigungseinrichtung eine zweite Zweigleitung ausgeht, die in einen höher liegenden Bereich des Reduktionsreaktors mündet.

Vorteilhaft ist eine Pneumatik-Förderleitung zur Förderung des im Wirbelschicht-Reduktionsreaktor gebildeten Eisenschwammes in den Einschmelzvergaser vorgesehen, wobei die Förderleitung in Höhe des Fließbettes und/oder Festbettes in den Einschmelzvergaser mündet.

Vorzugsweise mündet in die Gasleitung, die vom Wirbelschicht-Reduktionsreaktor in den Wirbelschicht-Vorwärmreaktor mündet, eine Sauerstoffleitung ein.

Das Reduktionsverfahren läßt sich über den Fluidisierungsgrad innerhalb des Reduktionsreaktors (und auch des Vorwärmreaktors) vorteilhaft dadurch steuern, daß der Wirbelschicht-Reduktionsreaktor einen unteren Teil mit geringerem Durchmesser und einen oberen, an den unteren Teil anschließenden Teil mit größerem Durchmesser aufweist, wobei der Übergang vom unteren in den oberen Teil konisch ausgebildet ist und in das konische Übergangsstück die zweite Gasleitung für das Reduktionsgas einmündet, wobei zweckmäßig der Wirbelschicht-Vorwärmreaktor ein konisches unteres Ende aufweist, in das die Gasleitung für das Reduktionsgas einmündet.

Um bereits fertig reduzierte Feinteile aus dem Wirbelschicht-Reduktionsreaktor ausbringen zu können, ist der Wirbelschicht-Reduktionsreaktor in Höhe der Wirbelschicht mit einer Feinteilaustragseinrichtung versehen, von der eine Förderleitung zu einer Pneumatik-Fördereinrichtung führt, die in Höhe des im Einschmelzvergaser gebildeten Festbettes oder Fließbettes in diesen einmündet.

Gemäß einer bevorzugten Ausführungsform sind zwei Wirbelschicht-Reduktionsreaktoren in Strömungsrichtung der Einsatzstoffe hintereinander liegend vorgesehen.

Eine besonders effiziente Verwertung der entstehenden Überschußgase ist gegeben, wein die Gasleitung für das Exportgas zur Erzeugung von heißbrikettiertem Eisen nach Zwischenschaltung eines CO₂-Wäschers und einer Aufheizeinrichtung in mindestens einen Reduktionsreaktor mündet, von dem eine Gasleitung in einen Wirbeischicht-Vorwärmreaktor geführt ist, wobei in den Wirbelschicht-Vorwärmreaktor eine Feinerz-Chargierleitung mündet und von dem Wirbelschicht-Vorwärmreaktor eine das vorgewärmte Feinerz zum Reduktionsreaktor führende Förderleitung ausgeht, und daß dem Reduktionsreaktor in Richtung des Feinerzflusses eine Verdichter- und Brikettiereinrichtung nachgeordnet ist.

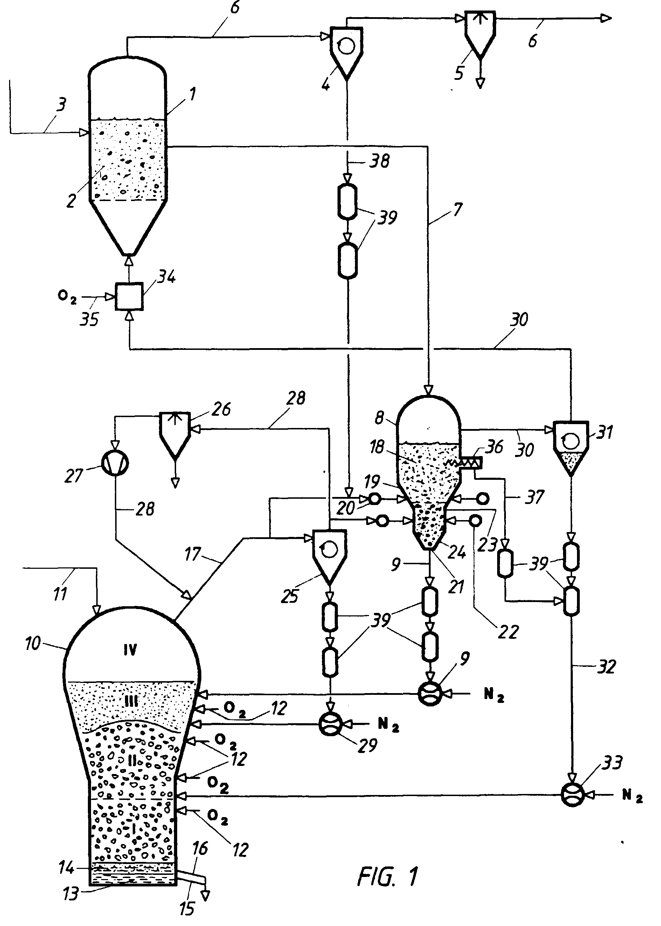

Die Erfindung ist nachstehend anhand dreier in der Zeichnung schematisch dargestellter Ausführungsbeispiele näher erläutert, wobei die Fig. 1 bis 3 jeweils eine vorteilhafte Ausführungsform einer erfindungsgemäßen Anlage in schematischer Darstellung zeigen.

Mit 1 ist ein Vorwärmreaktor, der als Wirbelschichtvorwärmreaktor ausgebildet ist, bezeichnet, in den Eisenerz und Zuschläge enthaltende Einsatzstoffe über eine seitlich in Höhe der Wirbelbettzone 2 (Vorwärmone) einmündende Chargierleitung 3 chargierbar sind. Am oberen Ende des schachtförmig ausgebildeten Wirbelschicht-Vorwärmreaktors 1 werden die in ihm gebildeten und ihn durchströmenden Gase über eine mit einem Gasreinigungszyklon 4 und einem Gaswäscher 5, wie einem Venturi-Wäscher, ausgestattete Gasableitung 6 abgezogen. Diese Gase stehen als hochwertiges Exportgas mit einem Heizwert von ca. 8000 kJ/Nm³ für verschiedene Zwecke, z.B. Strom- mit oder ohne Sauerstoff-Erzeugung, zur Verfügung.

Die in dem Wirbelschicht-Vorwärmreaktor 1 vorgewärmten Einsatzstoffe gelangen über eine Förderleitung 7 zur Gänze in einen ebenfalls als Wirbelschichtreaktor ausgebildeten Reduktionsreaktor 8 und werden in diesem größtenteils fertigreduziert.

Über eine Pneumatik-Eisenschwamm-Förderleitung 9 (mit N₂-Injektor) - hier könnte auch eine andere Zwangsfördereinrichtung vorgesehen sein - gelangt der im Wirbeischicht-Reduktionsreaktor 8 gebildete Eisenschwamm in einen Einschmelzvergaser 10, u.zw. wird er in Höhe eines im Einschmelzvergaser vorgesehenen Fließbettes III, II und/oder in Höhe des darunter befindlichen Festbettes I in diesen eingeleitet. Der Einschmelzvergaser weist mindestens eine Zuführung 11 für Kohle und Zuschläge sowie in mehreren Höhen angeordnete Düsenzuführungen 12 für sauerstoffhältige Gase auf.

In dem Einschmelzvergaser 10 sammelt sich unterhalb der Einschmelzvergasungszone, die von einem Festbett I, dem darüber liegenden Grobkoksfließbett II, dem über diesem liegenden Feinkoksfließbett III und dem darüber liegenden Beruhigungsraum IV gebildet ist, schmelzflüssiges Roheisen 13 und schmelzflüssige Schlacke 14, die über je einen Abstich 15, 16 getrennt abgestochen werden. In dem Einschmelzvergaser 10 wird aus den Kohlenstoffträgern und dem sauerstoffhältigen Gas ein Reduktionsgas erzeugt, welches sich im Beruhigungsraum IV oberhalb des Fließbettes III sammelt und über eine Gasleitung 17 dem Wirbelschicht-Reduktionsreaktor 8 zugeführt wird, u.zw. über eine zwecks Ausbildung einer Wirbelschicht 18 bzw. eines Wirbelbettes 18 (Reduktionszone) vorgesehene kegelstumpfförmige, einen Gasverteilungsboden 19 bildende Verengung des im wesentlichen schachtförmigen Wirbelschicht-Reduktionsreaktors 8, über deren Umfang das Reduktionsgas mittels einer Ringleitung 20 zugeführt wird.

Die großen Feststoffteilchen, die in der Wirbelschicht nicht in Schwebe gehalten werden können, sinken durch Schwerkrafteinwirkung mittig ab und werden über einen zentralen Feststoffaustrag 21 abgezogen. Dieser zentrale Feststoffaustrag 21 ist so gestaltet, daß über eine radiale Gasaufgabe 22 in den unterhalb des kegelstumpfförmigen Gasverteilungsbodens 19 angeordneten zylindrischen Behälterteil 23 mit Kegelboden 24 eine Festbettströmung ausgebildet wird, so daß eine zufriedenstellende Reduktion auch der großen Teilchen erreicht werden kann.

Durch die kegelstumpfförmige Gestalt des Gasverteilungsbodens 19 ändert sich die Leerrohrgeschwindigkeit mit der Höhe. Als Folge stellt sich über die Höhe des Gasverteilungsbodens 19 eine eigene Korngrößenverteilung ein. Durch entsprechende Anordnung der Düsen im Gasverteilungsboden 19 kann somit eine intern zirkulierende Wirbelschicht ausgebildet werden, in der in der Mitte die Gasgeschwindigkeit höher ist als am Rand. Eine Wirbelschichtausbildung dieser Art kann sowohl für den Reduktionsreaktor 8 als auch für den Vorwärmreaktor 1 Verwendung finden.

Ein Teil des aus dem Einschmelzvergaser 10 austretenden Reduktionsgases wird in einem Heißzyklon 25 einer Reinigung, in einem nachgeordneten Wäscher 26 einer Kühlung unterzogen und über einen Verdichter 27 wiederum in das aus dem Einschmelzvergaser 10 austretende Reduktionsgas über die Gasleitung 28 zugemischt. Der im Heißzyklon 25 abgeschiedene Staub wird über einen N₂-Injektor 29 in den Einschmelzvergaser 10 rückgeleitet. Ein Teil des aus dem Heißzyklon 25 austretenden, noch ungekühlten Reduktionsgases gelangt über die Gasaufgabe 22, die von einer Ringleitung gebildet ist, in den Wirbelschicht-Reduktionsreaktor 8 über dessen zylindrischen Behälterteil 23.

Das aus dem Wirbelschicht-Reduktionsreaktor 8 abgezogene Gas wird über eine Gasleitung 30 einem Reduktionszyklon 31 zugeführt, in dem im Reduktionsgas noch enthaltene Feinteile abgeschieden und fertig reduziert werden. Diese Feinteile werden über eine Förderleitung 32 und einen N₂-Injektor 33 dem Einschmelzvergaser 10 etwa in der Höhe des oberen Endes des Festbettes I eingebracht.

Das aus dem Reduktionszyklon 8 austretende, teilweise oxidierte Reduktionsgas gelangt über die Gasleitung 30 in den Wirbelschicht-Vorwärmreaktor 1, wobei jedoch zur Aufheizung des Reduktionsgases ein Teil desselben verbrannt wird, u.zw. in einer Brennkammer 34, in die eine ein sauerstoffhältiges Gas zubringende Leitung 35 mündet.

Aus dem Wirbelschicht-Reduktionsreaktor 8 wird ein Teil der fertigreduzierten Einsatzstoffe in Höhe des Wirbelbettes 18 mit einer Austragsschnecke 36 abgezogen und mittels der Förderleitung 37 über einen N₂-Injektor 33 in den Einschmelzvergaser 10 etwa in Höhe des oberen Endes des Festbettes I eingebracht, vorzugsweise gemeinsam mit den aus dem Reduktionszyklon 31 stammenden Feinteilen.

Das im Zyklon 4 der Exportgas-Gasableitung 6 abgeschiedene feinteilige Gut wird über eine Förderleitung 38 mit Schleusen 39 - die auch in den anderen Förderleitungen 32, 37 für das teil- oder fertigreduzierte Gut vorgesehen sind - über die das Reduktionsgas in den Wirbelschicht-Reduktionsreaktor 8 zuführende Ringleitung 20 eingebracht.

Die Funktion der Anlage nach Fig. 1 ist im einzelnen wie folgt:

Das aufbereitete Feinerz - abgesiebt und getrocknet - mit einer beispielsweisen Kornverteilung von
- 0,044 mm = ca. 20 %
0,044 - 6,3 mm = ca. 70 %
6,3 - 12,7 mm = ca. 10 %
und einer Feuchte von ca. 2 % wird pneumatisch oder mit Hilfe eines Steil- oder Senkrechtförderers in den Vorwärmreaktor 1 chargiert. Dort wird es in der Wirbelbettzone 2 auf eine Temperatur von ca. 850°C vorgewärmt und infolge der reduzierenden Atmosphäre gegebenenfalls vorreduziert, etwa bis zur Wüstitstufe.

Für diesen Vorreduktionsvorgang soll das Reduktionsgas mindestens 25 % CO + H₂ beinhalten, um genügend Reduktionskraft zu besitzen.

In weiterer Folge fließt das vorgewärmte und gegebenenfalls vorreduzierte Feinerz - vorzugsweise schwerkraftbedingt - in der Reaktionsreaktor 8, in dessen Wirbelschicht bzw. Wirbelbett 18 das Feinerz bei einer Temperatur von ca. 850°C bis zur Fe-Stufe weitgehend reduziert. Für diesen Reduktionsvorgang soll das Gas einen Gehalt an Co + H₂ von mindestens 68 % aufweisen.

Im Reduktionsreaktor 8 findet eine Sichtung des Feinerzes statt, wobei der Anteil unter 0,2 mm mittels des Reduktionsgases in den Reduktionszyklon 31 mitgeschleppt wird. Dort findet während des Abscheidens der Festetoffe durch die Zyklonwirkung die Fertigreduktion des unter 0,2 mm-Feinerzes statt.

Der feinere Feststoffanteil, der aus der Wirbelschicht 18 des Reduktionsreaktors 8 mit Hilfe der Austragsschnecke 36 ausgetragen wird, wird über die Schleusen 39 gemeinsam mit dem im Reduktionszyklon 31 abgeschiedenen Feinerz mit Hilfe des N₂-Injektors 33 dem Einschmelzvergaser 10 im Bereich der Einblasebenen des sauerstoffhältigen Gases zugeführt.

Der gröbere Feststoffanteil aus dem unteren Bereich des Reduktionsreaktors 8 wird über die Schleusen 39 und mit Hilfe des N₂-Injektors 9 oder mittels eines Schwerkraftaustrages in den Einschmelzvergaser 10 im Bereich des Feinkoksfließbettes III eingeblasen bzw. chargiert.

Der im Heißzyklon 25 abgeschiedene Staub (vorwiegend Fe- und C-hältig) wird über Schleusen 39 mit Hilfe des N₂-Injektors 29 und mittels eines Sauerstoff-Staubbrenners dem Einschmelzvergaser 10 im Bereich zwischen dem Feinkoksfließbett III und dem Grobkoksfließbett II zugeführt.

Die für den Prozeß benötigten Zuschläge werden grobkörnig, vorzugsweise in einer Korngröße von 4 bis 12,7 mm, über den Kohlenweg (11) und feinkörnig, vorzugsweise in einer Korngröße von 2 bis 6,3 mm, über den Feinerzweg (3) zwecks Vorwärmung und Calcinierung chargiert.

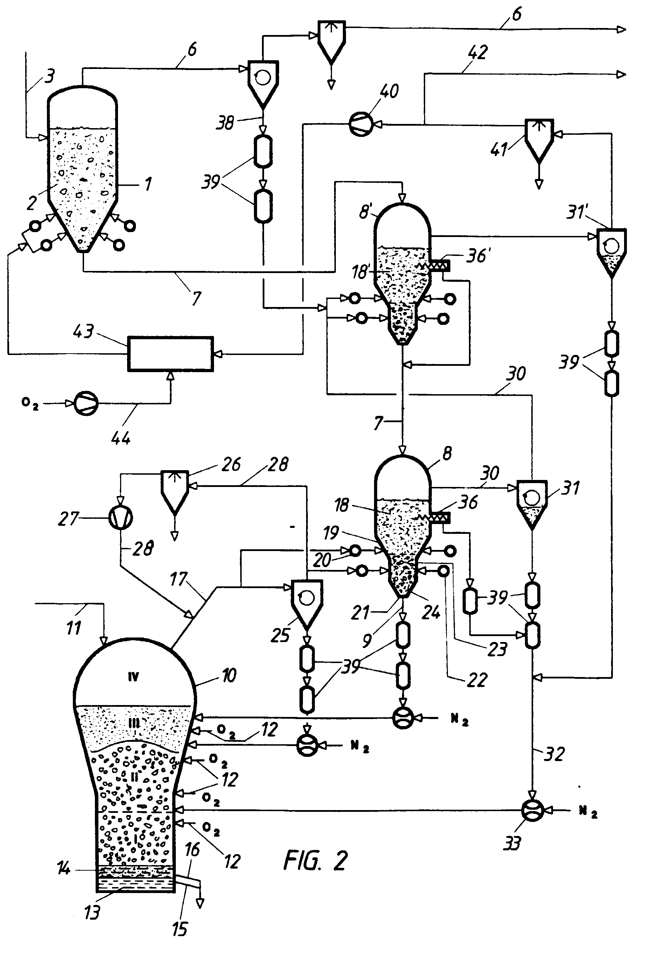

Für Feinerze mit längerer Reduktionsdauer ist, wie in Fig. 2 dargestellt, ein zweiter (sowie, wenn erforderlich, ein dritter) Wirbelschicht-Reduktionsreaktor 8' mit zusätzlichem Reduktionszyklon 31' in Serie bzw. in Reihe zum ersten Reduktionsreaktor 8 vorgesehen. Beim zweiten Reduktiongreaktor 8' wird das Feinerz bis zur Wüstitstufe und beim ersten Reduktionsreaktor 8 bis zur Fe-Stufe reduziert.

In diesem Fall wird der Feststoffanteil, der aus der Wirbelschicht 18' des zweiten Reduktionsreaktors mit Hilfe der Austragsschnecke 36' ausgetragen wird, gemeinsam mit dem gröberen Feststoffanteil aus dem unteren Bereich des zweiten Reduktionsreaktors 8' schwerkraftbedingt in den ersten Reduktionsreaktor 8 chargiert. Das im zweiten Reduktionszyklon 31' abgeschiedene Feinerz wird gemeinsam mit dem im ersten Reduktionszyklon 31 abgeschiedenen Feinerz mit Hilfe des N₂-Injektors 33 dem Einschmelzvergaser 10 im Bereich der Einblasebenen des sauerstoffhältigen Gases zugeführt.

Wenn im Falle der Verwendung von zwei Wirbeischicht-Reduktionsreaktoren 8, 8' und zwei Reduktionszyklonen 31, 31' der Betriebsdruck nicht ausreicht, um die Druckverluste im System auszugleichen, wird erfindungsgemäß das für den Vorwärmreaktor 1 benötigte Gasgemisch auf den erforderlichen Druck mit Hilfe des Verdichters 40 gebracht. In diesem Fall wird das Gas aus dem zweiten Reduktionszyklon 31' in einem Wäscher 41 gereinigt. In der weiteren Folge wird jedoch nur ein Teilstrom des Gases verdichtet - ein Teil wird als Exportgas über die Leitung 42 abgezogen - und in einer Mischkammer 43 mit einem über eine Leitung 44 zugeführten sauerstoffhältigen Gas entsprechend vermischt, so daß anschließend im Vorwärmreaktor 1 eine Teilverbrennung des Reduktionsgases zwecks Erreichen der benötigten Feinerz-Vorwärmungstemperatur stattfinden kann.

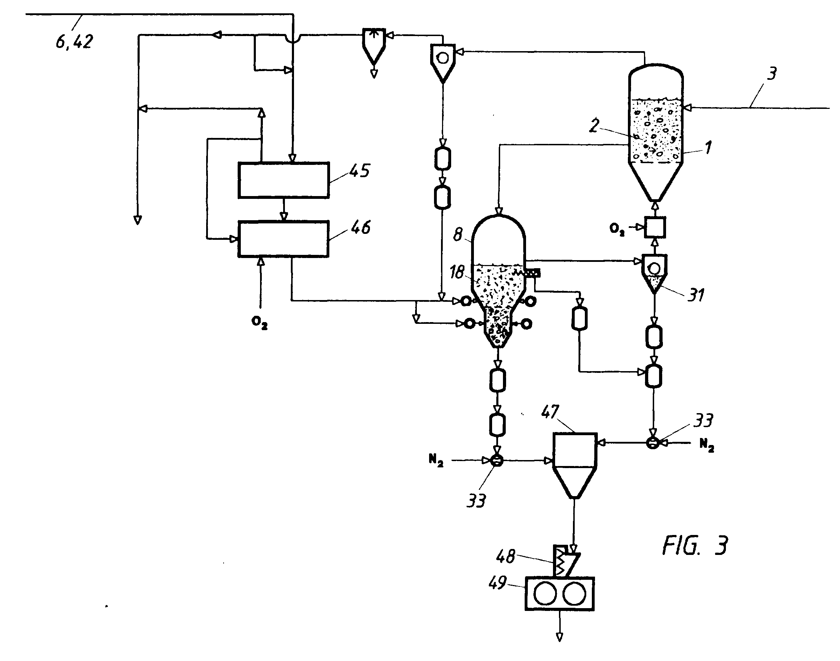

Das hochwertige Exportgas aus der Roheisenherstellung kann wie oben angeführt zur Strom- mit oder ohne Sauerstoff-Erzeugung verwendet werden. Nach einer bevorzugten erfindungsgemäßen Ausführungsform, die in Fig. 3 veranschaulicht ist, wird das Exportgas nach einer CO₂-Reinigung 45 und Aufwärmung 46 auf ca. 850°C wie nachfolgend beschrieben wieder als Reduktionsgas eingesetzt:

Zur Erzeugung von heißbrikettiertem Eisen wird das Feinerz gleicher Spezifikation wie für die Roheisenherstellung mit dem Reduktionsgas in den gleichen Aggregaten wie bei der Roheisenherstellung vorgewärmt und reduziert. Die fertig reduzierten Kornfraktionen aus dem mindestens einen Reduktionsreaktor 8 und aus dem Reduktionszyklon 31 werden mit Hilfe von N₂-Injektoren 33 in einen Beschickungsbunker 47 eingeblasen. Alternativ kann die gröbere Kornfraktion aus dem unteren Bereich des Reduktionsreaktors 8 mittels eines Schwerkraftaustrages in den Beschickungsbunker 47 chargiert werden.

Anschließend gelangt das fertig reduzierte Feinerz mit ca. 92 % Metallisierungsgrad und einer Temperatur von mindestens 750°C schwerkraftbedingt über eine Vorverdichterschnecke 48 mit regelbarem Motor in eine Walzen-Brikettierpresse 49.

In den nachfolgenden Beispielen sind typische Kenndaten der erfindungsgemäßen Verfahren zusammengestellt, die beim Betrieb der erfindungsgemäßen Anlagen gemäß den in den Fig. 1 bis 3 dargestellten Ausführungsformen erreicht werden.

### Beispiel:

| Kohleanalyse (trockene Analysenwerte) | |
|---|---|
| C | 77 % |
| H | 4,5 % |
| N | 1,8 % |
| O | 7,6 % |
| S | 0,5 % |
| Asche | 9,1 % |
| C_{fix} | 61,5 % |

| Erzanalyse (feuchte Analysenwerte) | |
|---|---|
| Fe | 62,84 % |
| Fe₂O₃ | 87,7 % |
| CaO | 0,73 % |
| MgO | 0,44 % |
| SiO₂ | 6,53 % |
| Al₂O₃ | 0,49 % |
| MnO | 0,15 % |
| Glühverluste | 0,08 % |
| Feuchte | 2 % |

| Korngrößenverteilung des Feinerzes | |
|---|---|
| + 10 mm | 0 % |
| 10 - 6 mm | 5,8 % |
| 6 - 2 mm | 44,0 % |
| 2 - 0,63 mm | 29,6 % |
| 0,63 - 0,125 mm | 13,0 % |
| - 0,125 mm | 7,6 % |

| Zuschläge (trockene Analysenwerte) | |
|---|---|
| CaO | 45,2 % |
| MgO | 9,3 % |
| SiO₂ | 1,2 % |
| Al₂O₃ | 0,7 % |
| MnO | 0,6 % |
| Fe₂O₃ | 2,3 % |
| Glühverluste | 39,1 % |

Für die Erzeugung von 42 t Roheisen/h in der Anlage gemäß Fig. 1 werden 42 t Kohle/h mit 29.000 Nm³ O₂/h vergast. Der Erzverbrauch beträgt dafür 64 t/h und der Verbrauch an Zuschlägen 14 t/h.

Das erzeugte Roheisen hat neben Eisen folgende Zusammensetzung:

| | |
|---|---|
| C | 4,2 % |
| Si | 0,4 % |
| P | 0,07 % |
| Mn | 0,22 % |
| S | 0,04 % |

Das Exportgas aus der Roheisenanlage fällt mit 87.000 Nm³/h an und weist folgende Analyse auf:

| | |
|---|---|
| CO | 36,1 % |
| CO₂ | 26,9 % |
| H₂ | 16,4 % |
| H₂O | 1,5 % |
| N₂ + Ar | 18,1 % |
| CH₄ | 1 % |
| H₂S | 0,02 % |
| Heizwert | 6780 kJ/Nm³ |

Bei einer weiteren Nutzung des Exportgases aus der Roheisenanlage zur Produktion von heißbrikettiertem Eisen gemäß Fig. 3 können 29 t heißbrikettiertes Eisen/h erzeugt werden. Die dazu notwendige Recyclegasmenge beträgt 36.000 Nm³/h. Der heißbrikettierte Eisenschwamm weist folgende Analysenwerte auf:

| | |
|---|---|
| Metallisierung | 92 % |
| C | 1 % |
| S | 0,01 % |
| P | 0,03 % |

Die Exportgasmenge aus der Anlage zur Erzeugung von heißbrikettiertem Eisen beträgt 79.000 Nm³/h, und das Gas hat die Zusammensetzung:

| | |
|---|---|
| CO | 21,6 % |
| CO₂ | 44,1 % |
| H₂ | 10,6 % |
| H₂O | 2,8 % |
| N₂ + Ar | 19,9 % |
| CH₄ | 1 % |
| Heizwert | 4200 kJ/Nm³ |

Der elektrische Leistungsbedarf der Roheisenanlage und Anlage zur Erzeugung von heißbrikettiertem Eisen beträgt 23 MW. Das Exportgas nach der Anlage zur Erzeugung von heiebrikettiertem Eisen entspricht einer thermischen Leistung von 145 MW.

## Patentansprüche

1. Verfahren zur Herstellung von flüssigem Roheisen oder flüssigen Stahlvorprodukten aus von Eisenerzen und Zuschlägen gebildeten, zumindest teilweise einen Feinanteil aufweisenden Einsatzstoffen, wobei die Einsatzstoffe in einer Vorwärmzone (2) einer Vorwärmung im Wirbelschichtverfahren unterzogen werden, in mindestens einer Reduktionszone (18, 18') im Wirbelschichtverfahren zu Eisenschwamm direkt und weitgehend fertig reduziert werden, der Eisenschwamm in eine Einschmelzvergasungszone (I bis IV) chargiert, unter Zufuhr von Kohlenstoffträgern und sauerstoffhältigem Gas erschmolzen und ein CO- und H₂-hältiges Reduktionsgas erzeugt wird, welches in die Reduktionszone (18, 18') eingeleitet, dort umgesetzt, als Exportgas abgezogen und einem Verbraucher zugeführt wird,
dadurch gekennzeichnet,
daß vorwiegend hämatitischer und/oder magnetitischer Feinerze und/oder Erzstäube verarbeitet werden,
daß das in der Einschmelzvergasungszone (I bis IV) gebildete Reduktionsgas
• zum Teil nach Reinigung in einem Heißzyklon (25) der Reduktionszone in ein in ihrem unteren Teil gebildetes Bett, gebildet von größeren Feststoffteilchen, und
• zum anderen Teil der Reduktionszone direkt in einen höheren Bereich - uzw. ohne Reinigung - zur Bildung einer Wirbelschicht (18) zugeführt wird.

2. Verfahren nach Anspruch 1, dadurch gekennzeichnet, daß ein Teil des Reduktionsgases nach einer Reinigung in dem Heißzyklon (25) und in einem Wäscher (26) dem ersten, der Reduktionszone zugeführten Teil des Reduktionsgases als Kühlgas beigemengt wird.

3. Verfahren nach Anspruch 1 oder 2, dadurch gekennzeichnet, daß zumindest die feinteiligeren weitgehend fertig reduzierten Einsatzstoffe mittels einer Zwangsförderung, vorzugsweise einer pneumatischen Förderung, in das Fließbett (II, III) und/oder gegebenenfalls auch in das Festbett (I) der Einschmelzvergasungszone (I bis IV) chargiert und dort erschmolzen werden.

4. Verfahren nach einem oder mehreren der Ansprüche 1 bis 3, dadurch gekennzeichnet, daß das aus der Reduktionszone austretende Reduktionsgas der Vorwärmzone (2) zugeführt wird, wobei durch eine Teilverbrennung des Reduktionsgases eine Temperaturerhöhung vorgenommen wird.

5. Verfahren nach einem oder mehreren der Ansprüche 1 bis 4, dadurch gekennzeichnet, daß das aus der Reduktionszone abgezogene Reduktionsgas in einem Reduktionszyklon (31) von Feinteilen befreit wird und daß die im Reduktionszyklon (31) abgeschiedenen Feinteile während des Abscheidens weitgehend fertig reduziert werden sowie mit Hilfe eines Injektors (33) der Einschmelzvergasungszone (I bis IV) im Bereich der Zuführung von sauerstoffhältigem Gas zugeführt werden.

6. Verfahren nach einem oder mehreren der Ansprüche 1 bis 5, dadurch gekennzeichnet, daß aus der Wirbelschicht (18) der Reduktionszone ein Teil der Einsatzstoffe ausgetragen wird und über ein Schleusensystem (39) mit Hilfe eines Injektors (33) der Einschmelzvergasungszone (I bis IV) im Bereich der Zuführung von sauerstoffhältigem Gas zugeführt wird.

7. Verfahren nach Anspruch 6, dadurch gekennzeichnet, daß der aus der Wirbelschicht (18) der Reduktionszone ausgetragene Teil der Einsatzstoffe gemeinsam mit dem im Reduktionszyklon (31) abgeschiedenen Gut der Einschmelzvergasungszone (I bis IV) zugeführt wird.

8. Verfahren nach Anspruch 6 oder 7, dadurch gekennzeichnet, daß der im Heißzyklon (25) abgeschiedene Staub über ein Schleusensystem (39) mit Hilfe eines Injektors (29) und mittels eines Sauerstoffstaubbrenners der Einschmelzvergasungszone (I bis IV) im Bereich zwischen einem sich dort bildenden Feinkoksfließbett (III) und einem Grobkoksfließbett (II) zugeführt wird.

9. Verfahren nach einem oder mehreren der Ansprüche 1 bis 8, dadurch gekennzeichnet, daß ein Teil der für das Einschmelzverfahren benötigten Zuschläge gemeinsam mit der Kohle direkt in die Einschmelzvergasungszone (I bis IV) chargiert und ein Teil der Zuschläge gemeinsam mit dem Feinerz in die Vorwärmzone (2) chargiert wird.

10. Verfahren nach Anspruch 9, dadurch gekennzeichnet, daß die gemeinsam mit der Kohle chargierten Zuschläge als Grobkorn, vorzugsweise in der Größe zwischen 4 mm und 12,7 mm, und die gemeinsam mit dem Feinen chargierten Zuschläge in feinkörniger Form, vorzugsweise in der Größenordnung zwischen 2 mm und 6,3 mm, eingesetzt werden.

11. Verfahren nach einem oder mehreren der Ansprüche 1 bis 10, dadurch gekennzeichnet, daß zwei örtlich getrennte hintereinandergeschaltete Reduktionszonen (18, 18') vorgesehen sind, wobei das Reduktionsgas, das aus der ersten Reduktionszone (18) austritt, der zweiten, der ersten Reduktionszone (18) im Sinne des Feinerzflusses vorgeordneten Reduktionszone (18') zugeleitet und von dieser unter Druckverdichtung der Vorwärmzone (2) zugeführt wird.

12. Verfahren nach einem oder mehreren der Ansprüche 1 bis 11, dadurch gekennzeichnet, daß das aus der Vorwärmzone (2) austretende Exportgas gegebenenfalls nach Zumischung eines Teiles des aus der Reduktionszone (18) austretenden Reduktionsgases nach einer CO₂-Reinigung zur Erzeugung von heiß brikettiertem Eisen herangezogen wird, wobei Feinerz in einer Vorwärmzone (2) einer Vorwärmung unterzogen, anschließend in mindestens einer Reduktionszone (18) einer weitgehenden Fertigreduktion unterzogen und weiters einer Verdichter- und Brikettiereinrichtung (48, 49) zugeführt wird, und das Exportgas nach einer Aufheizung in die mindestens eine Reduktionszone unter Bildung eines Wirbelbettes (18) geleitet sowie von dieser nach Durchströmen desselben abgezogen und der Vorwärmzone (2) unter Teilverbrennung zwecks Temperaturerhöhung zur Bildung eines Wirbelbettes zugeführt wird.

13. Anlage zur Durchführung des Verfahrens nach einem oder mehreren der Ansprüche 1 bis 13, mit mindestens einem Wirbelschicht-Reduktionsreaktor (8, 8'), in den eine Förderleitung (7) für Eisenerz und Zuschläge enthaltende Einsatzstoffe, eine Gasleitung (17) für ein Reduktionsgas sowie eine Förderleitung (9) für das in ihm gebildete Reduktionsprodukt und eine Gasleitung (30) für das Topgas münden, und mit einem Einschmelzvergaser (10), in den die das Reduktionsprodukt aus dem Reduktionsreaktor (8, 8') führende Förderleitung (9) mündet und der Zuleitungen (11, 12) für sauerstoffhältige Gase und Kohlenstoffträger sowie Abstiche (15, 16) für Roheisen (13) bzw. Stahlvormaterial und Schlacke (14) aufweist, wobei die in den Reduktionsreaktor (8, 8') mündende Gasleitung für im Einschmelzvergaser (10) gebildetes Reduktionsgas vom Einschmelzvergaser (10) ausgeht und dem Wirbelschicht-Reduktionsreaktor (8, 8') ein Wirbelschicht-Vorwärmreäktor (1) in Fließrichtung der Einsatzstoffe vorgeordnet ist, in den die Gasleitung (30) des Reduktionsreaktors (8, 8') einmündet, dadurch gekennzeichnet, daß die Gasleitung (17) für das Reduktionsgas mit einer ersten Zweigleitung über eine Gasreinigungseinrichtung (25) in einen unteren Bereich des Reduktionsreaktors (8) mündet und von der Gasleitung (17) vor der Gasreinigungseinrichtung eine zweite Zweigleitung ausgeht, die in einen höher liegenden Bereich des Reduktionsreaktors (8) mündet.

14. Anlage nach Anspruch 13, dadurch gekennzeichnet, daß eine Pneumatik-Förderleitung (9) zur Förderung des im Wirbelschicht-Reduktionsreaktor (8, 8') gebildeten Eisenschwammes in den Einschmelzvergaser (10) vorgesehen ist, wobei die Förderleitung in Höhe des Fließbettes (II, III) und/oder Festbettes (I) in den Einschmelzvergaser (10) mündet.

15. Anlage nach Anspruch 13 oder 14, dadurch gekennzeichnet, daß in die Gasleitung (30), die vom Wirbelschicht-Reduktionsreaktor (8, 8') in den Wirbelschicht-Vorwärmreaktor (1) mündet, eine Sauerstoffleitung (35) einmündet.

16. Anlage nach einem oder mehreren der Ansprüche 13 bis 15, dadurch gekennzeichnet, daß der Wirbelschicht-Reduktionsreaktor (8, 8') einen unteren Teil (23) mit geringerem Durchmesser und einen oberen, an den unteren Teil anschließenden Teil mit größerem Durchmesser aufweist, wobei der Übergang vom unteren in den oberen Teil konisch ausgebildet ist und in das konische Übergangsstück (19) die zweite Gasleitung für das Reduktionagas einmündet.

17. Anlage nach einem oder mehreren der Ansprüche 13 bis 16, dadurch gekennzeichnet, daß der Wirbelschicht-Vorwärmreaktor (1) ein konisches unteres Ende aufweist, in das die Gasleitung (30) für das Reduktionsgas einmündet.

18. Anlage nach einem oder mehreren der Ansprüche 13 bis 17, dadurch gekennzeichnet, daß der Wirbelschicht-Reduktionsreaktor (8, 8') in Höhe der Wirbelschicht (18, 18') mit einer Feinteilaustragseinrichtung (36) versehen ist, von der eine Förderleitung (37) zu einer Pneumatik-Fördereinrichtung (33) führt, die in Höhe des im Einschmelzvergaser (10) gebildeten Festbettes (I) oder Fließbettes (II) in diesen einmündet.

19. Anlage nach einem oder mehreren der Ansprüche 13 bis 18, dadurch gekennzeichnet, daß zwei Wirbelschicht-Reduktionsreaktoren (8, 8') in Strömungsrichtung der Einsatzstoffe hintereinander liegend vorgesehen sind.

20. Anlage nach einem oder mehreren der Ansprüche 13 bis 19 zur Durchführung des Verfahrens nach Anspruch 12, dadurch gekennzeichnet, daß die Gasleitung (6, 42) für das Exportgas zur Erzeugung von heißbrikettiertem Eisen nach Zwischenschaltung eines CO₂-Wäschers (45) und einer Aufheizeinrichtung (46) in mindestens einen Reduktionsreaktor (8) mündet, von dem eine Gasleitung in einen Wirbelschicht-Vorwärmreaktor (1) geführt ist, wobei in den Wirbelschicht-Vorwärmreaktor (1) eine Feinerz-Chargierleitung (3) mündet und von dem Wirbelschicht-Vorwärmreaktor (1) eine das vorgewärmte Feinen zum Reduktionsreaktor führende Förderleitung ausgeht, und daß dem Reduktionsreaktor (8) in Richtung des Feinerzflusses eine Verdichter- und Brikettiereinrichtung (48, 49) nachgeordnet ist.

## Claims

1. A process for producing molten pig iron or liquid steel pre-products from charging substances formed of iron ores and fluxes and at least partially comprising fines, wherein the charging substances are directly reduced to sponge iron in at least one reduction zone (18, 18') by the fluidized bed method, the sponge iron is melted in a melting-gasifying zone (I to IV) under supply of carbon carriers and oxygen-containing gas, and a CO and H₂-containing reducing gas is produced, which is injected into the reduction zone (18, 18'), is reacted there, is withdrawn as an export gas and is supplied to a consumer, characterized in that primarily hematite and/or magnetite fine ores and/or ore dusts are processed, the reducing gas formed in the melting-gasifying zone (I to IV) is fed
- partially, upon purification in a hot cyclone (25), to the reduction zone into a bed formed in its lower part and formed of larger solids particles, and
- to the other part of the reducing zone directly into a higher region - without purification - for the formation of a fluidized bed (18).

2. A process according to claim 1, characterized in that a portion of the reducing gas as a cooling gas is admixed to the first portion of the reducing gas, which is fed to the reduction zone, after purification in the hot cyclone (25) and in a scrubber (26).

3. A process according to claim 1 or 2, characterized in that at least the more finely particulate charging substances, which are completely reduced to the major extent, are charged into the fluidized bed (II, III) and/or, if desired, also into the fixed bed (I), of the melting-gasifying zone (I to IV) by forced conveyance, preferably by pneumatic conveyance, and are melted there.

4. A process according to one or several of claims 1 to 3, characterized in that the reducing gas leaving the reduction zone is fed to the preheating zone (2), a temperature increase being effected by partial combustion of the reducing gas.

5. A process according to one or several of claims 1 to 4, characterized in that the reducing gas withdrawn from the reduction zone is freed from fines in a reduction cyclone (31) and the fines separated in the reduction cyclone (31) are completely reduced to the major extent during separation and are supplied by aid of an injector (33) to the melting-gasifying zone (I to IV) in the region of the feeding of oxygen-containing gas.

6. A process according to one or several of claims 1 to 5, characterized in that a potion of the charging substances is discharged from the fluidized bed (18) of the reduction zone and, via a sleuce system (39), is supplied by aid of an injector (33) to the melting-gasifying zone (I to IV) in the region of the feeding of oxygen-containing gas.

7. A process according to claim 6, characterized in that the portion of charging substances discharged from the fluidized bed (18) of the reduction zone is supplied to the melting-gasifying zone (I to IV) together with the material separated in the reduction cyclone (31).

8. A process according to claim 6 or 7, characterized in that the dust separated in the hot cyclone (25) is supplied to the melting-gasifying zone (I to IV) in the region between a fine-coke fluidized bed (III) forming there and a coarse-coke fluidized bed (II), via a sleuce system (39) by aid of an injector (29) and by means of an oxygen dust burner.

9. A process according to one or several of claims 1 to 8, characterized in that a potion of the fluxes required for the melting process is charged directly into the melting-gasifying zone (I to IV) together with the coal and a portion of the fluxes is charged into the preheating zone (2) together with the fine ore.

10. A process according to claim 9, characterized in that the fluxes charged together with the coal are introduced as coarse grains, preferably ranging between 4 mm and 12.7 mm, and the fluxes charged together with the fine ore are introduced in fine-gain form, preferably ranging between 2 mm and 6.3 mm.

11. A process according to one or several of claims 1 to 10, characterized in that two locally separated consecutively arranged reduction zones (18, 18') are provided, the reducing gas leaving the first reduction zone (18) being conducted to the second reduction zone (18') preceding the first reduction zone (18) in the sense of the fine ore flow, and from there being fed to the preheating zone (2) under compression.

12. A process according to one or several of claims 1 to 11, characterized in that the export gas leaving the preheating zone (2), optionally upon admixture of a portion of the reducing gas leaving the reduction zone (18), after CO₂ purification is used for producing hot-briquetted iron, wherein fine ore is subjected to preheating in a preheating zone (2), subsequently is subjected to a largely complete reduction in at least one reduction zone (18) and, furthermore, is supplied to a compressing and briquetting means (48, 49), and the export gas, upon heating, is conducted into the at least one reduction zone under formation of a fluidized bed (18), and, after having flown therethrough, is withdrawn from the same and fed to the preheating zone (2) under partial combustion aimed at a temperature elevation for forming a fluidized bed.

13. A plant for carrying out the process according to one or several of claims 1 to 12, comprising at least one fluidized-bed reduction reactor (8, 8'), into which enter a conveying duct (7) for charging substances containing iron ore and fluxes, a gas duct (17) for a reducing gas as well as a conveying duct (9) for the reduction product formed therein and a gas duct (30) for the top gas, and comprising a melter gasifier (10), into which the conveying duct (9) conducting the reduction product from the reduction reactor (8, 8') enters and which includes feed ducts (11, 12) for oxygen-containing gases and carbon carriers as well as taps (15, 16) for pig iron (13) or steel pre-material and slag (14), wherein the gas duct for reducing gas formed in the melter gasifier (10) entering into the reduction reactor (8, 8') departs from the melter gasifier (10) and a fluidized-bed preheating reactor (1) precedes the fluidized-bed reduction reactor (8, 8') in the flow direction of the charging substances, into which fluidized-bed preheating reactor the gas duct (30) of the reduction reactor (8, 8') runs, characterized in that the gas duct (17) for the reducing gas runs into a lower region of the reduction reactor (8) by a first branch duct via a gas purification means (25), and a second branch duct departs from the gas duct (17) in front of the gas purification means and runs into a region of the reduction reactor (8) located on a higher level.

14. A plant according to claim 13, characterized in that a pneumatic conveying duct (9) is provided for conveying the sponge iron formed in the fluidized-bed reduction reactor (8, 8') into the melter gasifier (10), said conveying duct entering the melter gasifier (10) on the level of the fluidized bed (II, III) and/or fixed bed (I).

15. A plant according to claim 13 or 14, characterized in that an oxygen duct (35) runs into the gas duct (30) leading from the fluidized-bed reduction reactor (8, 8') into the fluidized-bed preheating reactor (1).

16. A plant according to one or several of claims 13 to 15, characterized in that the fluidized-bed reduction reactor (8, 8') comprises a lower part (23) having a smaller diameter and an upper part following upon the lower part and having a larger diameter, the transition from the lower part to the upper part being conically designed and the second gas duct for the reducing gas entering the conical transition piece (19).

17. A plant according to any one of claims 13 to 16, characterized in that the fluidized-bed preheating reactor (1) has a conical lower end into which the gas duct (30) for the reducing gas runs.

18. A plant according to one or several of claims 13 to 17, characterized in that the fluidized-bed reduction reactor (8, 8'), on the level of the fluidized bed (18, 18'), is provided with a fines discharge means (36), from which a conveying duct (37) leads to a pneumatic conveying means (33) entering into the melter gasifier (10) on the level of the fixed bed (I) or fluidized bed (II) formed therein.

19. A plant according to one or several of claims 13 to 18, characterized in that two fluidized-bed reduction reactors (8, 8') are consecutively arranged in the flow direction of the charging substances.

20. A plant according to one or several of claims 13 to 19 for carrying out the process according to claim 12, characterized in that the gas duct (6, 42) for the export gas for producing hot-briquetted iron, after the intermediate arrangement of a CO₂ scrubber (45) and a heating means (46), runs into at least one reduction reactor (8) from which a gas duct is conducted into a fluidized-bed preheating reactor (1), wherein a fine-ore charging duct (3) enters into the fluidized-bed preheating reactor (1) and a conveying duct conducting the preheated fine ore to the reduction reactor departs from the fluidized-bed preheating reactor (1), and that a compressing and briquetting means (48, 49) is arranged to follow the reduction reactor (8) in the direction of the fine-ore flow.

## Revendications

1. Procédé pour produire de la fonte brute liquide ou des produits d'acier préaffinés liquides à partir de charges, qui sont formées par des minerais de fer et des fondants et qui présentent au moins on partie une fraction de fines, dans lequel les charges sont soumises dans le procédé par couche fluidisée à un préchauffage dans une zone de préchauffage (2), sont directement et amplement réduites de façon finale dans le procédé par couche fluidisée à du fer spongieux dans au moins une zone de réduction (18, 18'), le fer spongieux est chargé dans uns zone de gazéification à fusion (I à IV) et eut fondu avec l'amenée de porteurs de carbone et de gaz contenant de l'oxygène et un gaz de réduction contenant du CO et du H₂ est produit, lequel est introduit dans la zone de réduction (18, 18'), y est transformé, est retiré comme gaz d'exportation et est amené à un consommateur,
caractérisé en ce que des fines de minerais et/ou des poudres de minerais principalement à l'hématite et/ou au magnétite sont traités et en ce que le gaz de réduction, qui est formé dans la zone de gazéification à fusion (I à IV) est amené pour une partie, après nettoyage dans un séparateur à cyclone à chaud (25), à la zone de réduction dans un lit, qui est formé dans se partie inférieure et qui est formé par des particules de matière solide plus grandes, et pour l'autre partie à lu zone de réduction directement dans une zone plus élevée - et cela sans nettoyage - pour la formation d'une couche fluidisée (18).

2. Procédé suivant la revendication 1, caractérisé en ce qu'une partie du gaz de réduction est mélangé comme gaz de refroidissement à la première partie du gaz de réduction, qui est amenée a la zone de réduction, après un nettoyage dans le séparateur à cyclone à chaud (25) et dans un appareil laveur (26).

3. Procédé suivant la revendication 1 ou 2, caractérisé en ce que au moins les charges plus fines et amplement réduites de façon finale sont chargées au moyen d'une amenée forcée, de préférence une amenée pneumatique, dans le lit fluidisé (II,III) et/ou le cas échéant également dans le lit fixe (I) de la zone de gazéification à fusion (I à IV) et fondus la.

4. Procédé suivant une ou plusieurs des revendications 1 à 3, caractérisé en ce que le gaz de réduction qui sort de la zone de réduction est amené à la zone de préchauffage (2), une élévation de température étant réalisée par une combustion partielle du gaz de réduction.

5. Procédé suivant une ou plusieurs des revendications 1 à 4, caractérisé en ce que le gaz de réduction tiré de la zone de réduction est libéré des particules fines dans un séparateur à cyclone de réduction (31) et en ce que les particules fines isolées dans le séparateur à cyclone de réduction (31) sont amplement réduites de façon finale pendant la séparation et également amenées à la zone de gazéification à fusion (I à IV) dans la zone d'amenée du gaz contenant de l'oxygène à l'aide d'un injecteur (33).

6. Procédé suivant une ou plusieurs des revendications 1 à 5. caractérisé en ce qu'une partie des charges est sortie de la couche fluidisée (18) de la zone de réduction et est amenée à la zone de gazéification à fusion (I à IV) dans la zone d'amenée du gaz contenant de l'oxygène par un système d'éclusage (39) à l'aide d'un injecteur (33).

7. Procédé suivant la revendication 6, caractérisé en ce que la partie de charges sorties de la couche fluidisée (18) de la zone de réduction est amenée de concert avec le matériau isolé dans le séparateur à cyclone de réduction (31) à la zone de gazéification à fusion (I à IV).

8. Procédé suivant la revendication 6 ou 7, caractérisé en ce que la poussière isolée dans le séparateur à cyclone à chaud (25) est amenée à la zone de gazéification à fusion (I à IV) dans la zone comprise entre un lit fluidisé de coke granulé (III) qui s'y forme et un lit fluidisé de coke grossier (II) par l'intermédiaire d'un système d'éclusage (39) à l'aide d'un injecteur (29) et au moyen d'un brûleur de poussières à oxygène.

9. Procédé suivant une ou plusieurs dus revendications 1 à 8, caractérisé en ce qu'une partie des fondants requis pour le procédé de fusion est chargée de concert avec le charbon directement dans la zone de gazéification à fusion (I à IV) et en ce qu'une partie des fondants est chargée de concert avec les fines de minerais dans la zone de préchauffage (2).

10. Procédé suivant la revendication 9, caractérisé en ce que les fondants chargés de concert avec le charbon sont utilisés comme gros grains, de préférence avec des dimensions comprises entre 4 mm et 12,7 mm, et les fondants chargés de concert avec les fines de minerais sont utilisés sous forme de granules fins, de préférence dans un ordre de grandeur compris entre 2 mm et 6,3 mm.

11. Procédé suivant une ou plusieurs des revendications 1 à 10, caractérisé en ce que deux zones de réduction (18,18') séparées localement et agencéss l'une derrière l'autre sont prévues, dans lequel le gaz de réduction, qui sort de la première zone de réduction (18), est amené à la deuxième zone de réduction (18'), qui est agencée en amont de la première zone de réduction (18) dans le sens d'écoulement des fines de minerais, et est amené à la zone de préchauffage (2) à partir de celle-ci avec densification par pression.

12. Procédé suivant une ou plusieurs des revendications 1 à 11, caractérisé en ce que le gaz d'exportation qui sort de la zone de préchauffage (2) est tiré pour la production de fer aggloméré à chaud, le cas échéant après addition d'une partie du gaz de réduction sortant de la zone de réduction (18) après un nettoyage au CO₂, dans lequel des fines de minerais sont soumises à un préchauffage dans une zone de préchauffage (2), sont soumises ensuite à une ample réduction finale dans au moins une zone de réduction (18) et sont ensuite amenées à un dispositif de densification et d'agglomération (48,49) et le gaz d'exportation est amené dans la ou les zones de réduction après un chauffage avec formation d'un lit fluidisé (18), et est tiré de celui-ci après passage par ce dernier et est amené à une zone de préchauffage (2) avec combustion partielle aux fins d'une élévation de la température pour la formation d'un lit fluidisé.

13. Dispositif de mise en oeuvre du procédé suivant une ou plusieurs des revendications 1 à 12, comprenant au moins un réacteur de réduction à couche fluidisée (8,8') dans lequel débouchent un conduit d'amenée (7) destiné à du minerai de fer et des charges contenant dos fondants, une conduite de gaz (17) destinée à un gaz de réduction ainsi qu'un conduit d'amenée (9) destiné à un produit de réduction formé dans celui-ci et une conduite do gaz (30) destinée au gaz primaire, et comprenant un apparell de gazéification à fusion (10) dans lequel débouche le conduit d'amenée (9), qui amène le produit de réduction hors du réacteur de réduction (8, 8') et qui présente des amenées (11, 12) destinées à des gaz contenant de l'oxygène et des porteurs de carbone, ainsi que dus percées (15, 16) destinées à la fonte brute (13), du matériau d'acier préaffiné et respectivement des scories (14), dans lequel la conduite de gaz, qui débouche dans le réacteur de réduction (8, 8') et qui est destiné au gaz de réduction formé dans l'appareil de gazéification à fusion (10) part de l'appareil de gazéification (10), et un réacteur de préchauffage de couche fluidisés (1) est agencé en amont du réacteur de réduction de couche fluidisée (8, 8') dans le sens d'écoulement des charges, dans laquelle la conduite de gaz (30) du réacteur de réduction (8, 8') débouche, caractérisé en ce que la conduite de gaz (17) destinée au gaz de réduction débouche avec une première conduite de dérivation dans une zone inférieure du réacteur de réduction (8) par un dispositif de nettoyage au gaz (25) et en ce qu'une deuxième conduite de dérivation part de la conduite de gaz (17) en amont du dispositif de nettoyage au gaz, ladite deuxième conduite de dérivation débouchant dans une zone située plus en hauteur du réacteur de réduction (8).

14. Dispositif suivant la revendication 13, caractérisé en ce qu'un conduit d'amenée pneumatique (9) est prévu pour l'amenée du fer spongieux formé dans le réacteur de réduction à couche fluidisée (8, 8') dans l'appareil de gazéification à fusion (10), le conduit d'amenée débouchant à hauteur du lit fluidisé (II, III) et/ou du lit fixe (I) dans l'appareil de gazéification à fusion (10).

15. Dispositif suivant la revendication 13 ou 14, caractérisé en ce qu'une conduite d'oxygène (35) débouche dans la conduite de gaz (30) qui débouche dans le réacteur de préchauffage (1) à couche fluidisée à partir du réacteur de réduction à couche fluidisée (8,8').

16. Dispositif suivant une ou plusieurs des revendications 13 à 15, caractérisé en ce que le réacteur de réduction à couche fluidisée (8, 8') présente une partie inférieurs (23) possédant un diamètre plus faible et une partie supérieure se rattachant à la partie inférieure et possédant un diamètre supérieur, la transition de la partis inférieure à la partie supérieure étant réalisée de façon conique, et en ce que la deuxième conduite de gaz destinée au gaz de réduction débouche dans la pièce de transition conique (19).

17. Dispositif suivant une ou plusieurs des revendications 13 à 16, caractérisé en ce que le réacteur de préchauffage à couche fluidisée (1) présente une extrémité inférieure conique dans laquelle la conduite de gaz (30) destinée au gaz de réduction débouche.

18. Dispositif suivant une ou plusieurs des revendications 13 à 17, caractérisé en ce que le réacteur de réduction à couche fluidisée (8, 8') est pourvu à hauteur de la couche fluidisée (18, 18') d'un dispositif d'évacuation des particules fines (36), à partir, duquel un conduit d'amenée (37) mène à un dispositif d'amenée pneumatique (33) qui débouche dans l'appareil de gazéification à fusion (10) à hauteur du lit fixe (I) ou du lit fluidisé (II) formé dans celui-ci.

19. Dispositif suivant une ou plusieurs des revendications 13 à 18, caractérisé en ce que deux réacteurs de réduction à couche fluidisée (8, 8') sont prévus de façon à se trouver l'un derrière l'autre suivant le sens d'écoulement des charges.

20. Dispositif suivant une ou plusieurs des revendications 13 à 19 pour la mise en oeuvre du procédé suivant la revendication 12, caractérisé an ce que la conduite de gaz (6, 42) destinée au gaz d'exportation pour la production de fer aggloméré à chaud débouche, après interposition d'un appareil de lavage au CO₂ (45) et d'un dispositif de chauffage (46), dans su moins un réacteur de réduction (8), à partir duquel une conduite de gaz eut amenée dans un réacteur do préchauffage à couche fluidisée (1) une conduite de chargement de fines de minerais (3) débouchant dans le réacteur de préchauffage à couche fluidisée (1) et un conduit d'amenée qui conduit las fines de minerais préchauffées au réacteur de réduction (1) partant du réacteur de préchauffage à couche fluidisée (1), et en ce qu'un dispositif de densification et d'agglomération (48, 49) est agencé en aval du réacteur de réduction (8) dans le sens d'écoulement des fines de minerais.
